# EUROPEAN PATENT SPECIFICATION

(11) **EP 1 911 352 B1**
(45) Date of publication and mention of the grant of the patent: **06.08.2014**
(21) Application number: 06021304.8
(22) Date of filing: 11.10.2006
(51) Int. Cl.: A22C 13/00, B32B 1/08, B32B 27/20, B32B 5/18

(54) **Food casings capable of transferring a functional additive from a porous inner layer onto an encased food product**
Nahrungsmittelhülle mit der Fähigkeit ein funktionelles Additiv von einer innenliegenden porösen Schicht auf ein Lebensmittelprodukt zu übertragen
Enveloppe pour une produit alimentaire capable de transfert un additif fonctionnel d'une counche intérieure poreude aux produits alimentaires traités dans ladite enveloppe

(43) Date of publication of application: 16.04.2008
(73) Proprietor: Kalle GmbH, 65203 Wiesbaden (DE)
(72) Inventor: Stalberg, Stefanie, Dr., 65232 Taunusstein-Wehen (DE); Delius, Ulrich, Dr., 60529 Frankfurt (DE)
(74) Representative: Plate, Jürgen

(56) References cited:
- WO-A-2005/097461
- DE-A1- 10 314 900
- US-A1- 2006 003 058
- US-B1- 6 589 615

## Description

### BACKGROUND OF THE INVENTION

### Field of the Invention

The present invention relates generally to synthetic food casings, and especially to multilayered coextruded stretched thermoplastic food casings having at least two different layers of which at least one is a porous inner layer (P). The surfaces of the hollow spaces and pore channels may be able to absorb transferable functional additives, to store them and to transfer them to the food encased in the food casing. The casing may preferably be used for encasing meat products. In addition, the present invention relates to a method for the production of such a casing as well as to a method for the transmission of transferable functional additives from the food casing to the food contained inside the food casing.

### Description of Related Art

Food casings, especially synthetic sausage casings that contain substances which may be transferred onto a food product, in particular meat, a meat emulsion or sausage meat, are already well known.

US Patent No. 6,589,615 B1 discloses porous food casings made up of at least one food grade thermoplastic having a plurality of interconnected interstices as porosity therein. The interstices are defined by a porosity modifier which is soybean oil, peanut oil, corn oil, glycerin, polyethylene glycol, monolaurate, mineral oil, polyoxyethylene, sorbitan monostearate, sorbitan monooleate, or glycerol monooleate. The pore channels and pores are formed from a mixture comprising the thermoplastic material and the porosity modifier. When the mixture is cooled after extrusion, the two components undergo phase separation, thereby defining a network of interconnected pores or channels in the thermoplastic film. The porosity modifyer may be removed by extraction and the pores and channels left behind may be filled with a flavorant, a fragrance or a colorant to be transferred onto the food product. The casing may be multi-layered, e.g. a porous layer based on polyamide may be arranged on a porous layer based on polypropylene. Irrespective of the number of layers, the overall casing is porous. Its mechanical strength is thus relatively low. Water-soluble transferable functional additives not only migrate from the inner surface onto an encased food product, but also exudate from the outer surface.

Tubular food casings based on cellulose having on an inner side thereof smoke and/or spices have been described previously. These casings show a high permeability for water vapor and oxygen, which in turn causes quick desiccation, and hence, the encased food is only preserved for a short time.

DE 102 44 088.3 (=US 2006/0003058 A1) discloses an at least 2-layered tubular sausage casing, showing barrier properties for oxygen and water vapor. The innermost layer comprises a matrix of a thermoplastic polymer in which at least one pulverulent filler is dispersed. The filler is capable of absorbing and retaining a food additive, such as liquid smoke, which is subsequently transferred onto a food product encased in the tubular casing. Preferred as a barrier layer is a polyolefin layer, whereas the barrier layer for water vapor is preferably a polyamide and/or copolyamide layer. In order to achieve a good adhesion between the individual layers, an adhesion promoter may be admixed with the thermoplastic polymer of the inner layer.

Other food casings known in the art having inner layers which contain a transferable food additive frequently have the following disadvantages;

Their production is typically related with a great expenditure of work like
a) turning the casing inside out after coating,
b) producing two films separately and pulling one of them over the other, whereby the inner film is coated,
c) sealing together a barrier layer and a transfer layer.

The at least one additive, especially colorants and flavorants to be transferred to the food product, conventionally cannot be applied directly onto a carrier layer, or onto the casing. Rather such additives have to be compounded first with at least one suitable binder, optionally also with at least one wax, at least one cross-linking agent or any combination thereof, to achieve the desired properties.

The impregnated or coated layer or the casing frequently are not capable of transferring the total amount of additive(s) onto the surface and/or the interior of the food product. That is, typically a certain residual amount of additive remains in the layer, in the casing or in both. Therefore, the amount of additive transferred-which may be a liquid and/or solid - is often insufficient and/or the additive becomes inhomogeneously distributed.

Often, the casing cannot be easily peeled off from the food encased therein. Therefore, remainders of the inner layer may remain on the surface of the encased food product. In addition, the inner layer of the casing may be separated from the adjacent layer of the casing if adhesion between layers is not sufficient. Further, parts from the surface of the encased food products may also be torn out when the adhesion force between the inner layer and the surface of the food product is too strong. Casings produced by film blowing generally do not show a sufficient back-shrinkage at higher temperatures. They do not have a good orientation of the crystallographically different domains of the thermo-plastic material. This causes - especially when used in the production of sausages - the exudation of meat juice from the outer casing surface or wrinkling of the casing. Both of these problems are unsightly and undesirable.

### SUMMARY OF THE INVENTION

A multilayered coextruded stretched thermoplastic food casing comprising: at least one porous inner layer, wherein the porosity of the porous inner layer has been at least partially generated by stretching of the coextruded casing, wherein the porosity of the sum of all porous inner layers is in the range from 5 to 70 % by volume, and at least an inner most porous inner layer has an interconnected porosity, such that said inner most porous inner layer is able to absorb, retain, desorb and to transfer at least one transferable functional additive from said at least one porous inner layer to food encased in said casing, at least one layer having a barrier effect for water vapor, at least one layer having adhesion properties, said layer having adhesion properties can be the same or different than said porous inner layer and/or said layer having a barrier effect for water.

The present invention concerns further a method for production of a multilayered coextruded stretched thermoplastic food casing whereby pores and/or pore channels of the porous inner layer are generated at least partially during the stretching.

The present invention is further directed to a method for transmission of at least one transferable functional additive selected from the group consisting of colorants, flavorants, fragrances and other additives from a food casing to a food contained inside a food casing. Preferably at least 50 % by weight of the at least one transferable functional additive is transferred to the surface and/or to inner parts of the encased food. Preferably, the degree of transmission of the at least one transferable functional additive from the porous inner layer(s) to the food is at least 60 % by weight, at least 70 % by weight, at least 80 % by weight, at least 90 % by weight or even at least 95 % by weight.

### DESCRIPTION OF THE PREFERRED EMBODIMENT

It was an object of the present invention to provide a synthetic food casing which is relatively easy to produce without the disadvantage of having insufficient mechanical strength. The food casing should generally be able to absorb and to store functional additive(s) and, subsequently, to transfer as much as possible of the functional additive(s) onto an encased food product.

A further object of the present invention was to provide a method for the production of a multilayered coextruded stretched thermoplastic food casing having at least two different layers. One of the layers comprises at least one porous inner layer (P) which is capable of absorbing at least one transferable functional additive, such as liquid smoke, and which is capable of transferring the largest possible amount of the at least one functional additive onto the food product homogeneously.

It has been found that the above mentioned disadvantages are typically not observed when casings according to the invention are employed.

A casing according to the invention may be used as a packaging for any type of food including but not limited to meat products, sausage products, milk products, cheese products and dishes, whole or processed - especially to meat containing products like fermented dry or semi-dry sausage meat (Rohwurstbrät), cooked-meat sausage (Kochwurst), scalded emulsion sausage (Brühwurst) like frankfurters, cooked ham (Kochschinken), ham, pickled meat, smoked turkey breast and salt meat (Pökelware), -vegetables, dairy products like cheese, carbohydrates, soybean products as well as different mixtures or in any desired application. The casings may be used in any desired form such as in the form of "endless" tubes, of sections, of rings such as sausage rings, of customized products such as shirred sticks, and the casing can be empty, stuffed and further processed if desired.

Food is often processed, i.e. cooked in a plastic film package, for example by at least partially immersing the package in hot water or placing the package in a steam cabinet. The processed food package may then be refrigerated until the processed food is prepared for a meal or is to be consumed. During the cooking process e.g. of meat, excess water including water contained in the casing or in the food vaporizes though the casing while, for example, smoke or an other modifier for color, flavor or fragrance is diffusing through the casing into the meat.

### Transferable Functional Additives

The at least one transferable functional additive may be, for example one or more of colorants such as caramel or paprika extract, flavorants such as glutamates, fragrances such as terpenoides and/or any other desired food additives. Many transferable functional additives can be effective as two or three types of transferable functional additives selected from colorants, flavorants and fragrances. For example liquid smoke functions as a colorant, a flavorant as well as a fragrance.

A colorant, flavorant, fragrance and/or any other additive or any combination thereof may be applied - in one of the possible embodiments - to the casing in any desired way e.g. in a tube containing the liquid, dispersed, dissolved or in any combination. The functional additive can be in a liquid mass which may preferably be distributed with the aid of a liquid bubble such that the additive may be moved or distributed or both. In this way, the content of the functional additive may be directly applied to a coextruded and stretched casing. The transferable functional additive may be applied in its commercially available condition - preferably in a liquid form, especially in a dissolved form, dispersed form or in a dissolved and dispersed form, *e.g.* in water - or in a modified condition. More preferred, it is dissolved in water. It is typically applied onto an inner surface of the casing, which is the outer surface of the inner most of the porous inner layers (P) or onto the whole film(s), or onto the whole casing e.g. by dipping, flooding, spraying or even by squeezing of the tube containing the liquid mass. This can be done *e.g.* with the aid of squeezing rollers and distributing the liquid at least partially on the surface of the inner layer of the casing *e.g.* with the aid of such squeezing rollers. Preferably at least one of these compounds or a mixture containing at least one of these compounds - preferably in a liquid form - may be absorbed, charged, distributed, incorporated, injected, applied as a film or coating or in any combination thereof onto/in/into a film or an inner layer of the casing. It is especially desirable that the additive(s) are provided onto/in/into the porous inner layer or onto/in/into parts of the inner layer *e.g.* by the effect of capillary forces, and are optionally maintained at least partially in the layer. In one embodiment, it is preferred that only the porous inner layer is contacted with such compound(s) or their mixture(s). The surface of the film, casing or porous inner layer (P) may be immediately dry after the application, especially, if only surfaces of porous layers are contacted with such fluid or liquid. The transmission of these compounds/mixtures from the porous inner layer (P) of the food casing to the food may occur to a great extent or nearly completely via their interface. This is particularly the case if the porous inner layer is built up in a preferred embodiment from non-polar polymers like polyolefins as on the base of polypropylene, polyethylene, polybutylene or like polystyrene or any combination of these as base polymer(s) which may form the matrix of the material of this layer. If the colorant, the flavorant, the fragrance and/or any other additive is polar in nature, the transmission of such compound(s) may sometimes be nearly complete or perhaps even complete.

The fluid or liquid of the at least one transferable functional additive is preferably taken up from the pores contained at least in one porous inner layer (P). A casing of the present invention preferably has at least one porous inner layer (P), but it is preferred in several embodiments that most or all the other layers of the casing have low, nearly no or no porosity at all. It is preferred that such other layers show a high strength. If a casing has at least one non-porous layer and at least one porous inner layer (P), casings which are sufficiently porous can be formed. Such casings have a sufficient strength, a sufficient flexibility and/or a barrier effect for water vapor or gases like oxygen gas or both. One of skill in the art knows how to design the different layers to obtain the desired properties.

### The Porous Inner Layer (P)

There is typically at least one porous layer serving as the inner layer. Alternatively two, three or four or more porous inner layers may form a group of porous inner layers (P), of which one is the inner most porous layer (P) whose surface is adjacent to the encased food. Typically, at least one porous inner layer (P) is designed to absorb and therefore to immobilize the at least one transferable functional additive. The additive can be in liquid form and after it is immobilized, it can be desorbed, mobilized and transferred to food it is in contact with.

The at least one porous inner layer (P) preferably contains at least one plastic component, the porous inner layer also preferably contains at least one agent that can assist in the generation of pores or pore channels or both, especially during stretching. The porous layer also optionally comprises at least one emulsifying agent as well as preferably at least one fine-grained organic filler and/or inorganic filler.

Suitable fillers include a fine-grained particulate material, which may in some embodiments be able to absorb any liquid such as the liquid composition containing the transferable functional additive into the interior of the porous layer(s). The term "fine-grained" shall be used for non-particulate and for particulate either well grained or not well grained material. In many embodiments, it is preferred that at least one fine-grained filler used for or present in the porous inner layer (P) is a polar substance. Preferably, the filler(s) used has/have an average grain size in the range from 0.02 to 12 µm, more preferred in the range from 0.05 to 8 µm, often in the range from 0.2 to 5 µm. Such filler(s) may often help to immobilize the at least one transferable functional additive in at least one porous inner layer (P). Preferably, at least one porous inner layer (P) is able to immobilize the at least one transferable functional additive.

The porous inner layer (P) can generally include any thermoplastic organic polymer. Thermoplastic substances within the meaning of this application include organic polymers having an essential content of typically thermoplastic organic polymers. Typically such thermoplastic organic polymers have a transition region of flowing above the temperature of their use and below their melting temperature - especially for at least partially crystalline organic polymers. In many embodiments, the porous inner layer (P) contains more than one typically thermoplastic organic polymer. Often there are two or three, and sometimes even more than three different thermoplastic polymers or even at least two different thermoplastic polymers which differ with at least one chemical group.

Of the typically thermoplastic organic polymers, the following are especially preferred:
- aliphatic (co-)polyamides, partially aromatic (co-)polyamides,
- polyolefins - like polyethylenes, polypropylenes or copolymers based on e.g. ethylene, propylene, or other α-olefins, poly(iso)butene or any mixture thereof;
- Polyurethanes - especially polyaddition products which may have been produced e.g. by the reaction of toluylene diisocyanate (TDI), isophorone diisocyanate, hexamethylene diisocyanate or any combination thereof with poly-1,2-propanediol (polypropylene glycol (PPG)), poly-1,4-butanediol (polytetramethylene glycol (PTMG)) - polyether urethanes, polyester ether urethanes or any combination thereof;
- vinyl copolymers like ethylene vinyl acetate copolymers, polyvinyl alcohols, ethylene vinyl alcohol copolymers (EVOH) or any combination thereof, which optionally is partially or totally saponified, such as ethylene vinyl alcohol copolymers; polyvinylpyrrolidone, polystyrene, polyvinylchloride, polyvinylfluoride or any combination thereof;
- vinylidenechloride (co-)polymers (PVDC), e.g. copolymers of vinylidene chloride with comonomer(s) such as vinyl chloride or (meth)acrylate;
- (co-)polyesters of aliphatic, (partially) aromatic or aliphatic and aromatic character e.g. polylactide, polycaprolactone, polycarbonate or (co-)polymers of aliphatic diols with aliphatic or aromatic dicarboxylic acid(s) such as poly(butylene glycol terephthalate).

Preferably, at least one plastic material of a porous inner layer (P) is a non-polar substance.

The presence of at least one plastic material, of at least one fine-grained filler, optionally of at least one oil and optionally of at least one emulsifying agent in the mixture for a porous inner layer (P) often contributes to the generation of pores and/or pore channels during the production process of the porous inner layer(s) (P). Such effect may be enhanced by the presence of polar and non-polar substances, especially during stretching. A mixture comprising at least one plastic material and preferably at least one fine-grained filler may therefore be effective as porosity modifiers. Preferably, pores and/or pore channels of the porous inner layer(s) (P) are at least to a certain extent generated during stretching of the coextruded casing.

The hollow spaces and porosity interstices, especially of the interconnected porosity, are predominantly defined by the type and distribution of the components contributing to the pore generation, e.g. by their sizes, distribution and degree of polarity other factors are also important such as flexibility and strength of the at least partially molten, softened or solid film e.g. during the stretching. Parameters such as the forces used during stretching also play a part.

Further on, in some of the embodiments, it is preferred to add at least one oil to the porous layer. The term "oil" shall include all oils and any oily substance e.g. such as glycols that are not typical oils. The at least one oil is preferably a non-polar, it can serve as a pore generating agent if desired. The at least one oil and/or the at least one pore generating agent may preferably include one or more of
1. mineral oils
2. biogenous oils like peanut oil, soybean oil, sun-flower oil, rape-oil, olive-oil or any combination thereof,
3. other esters of natural fatty acids,
4. synthetic fatty acid esters of glycerin, such as glycerin monolaurate, glycerin monooleate, glycerin dioleate, glycerin trioleate or any combination thereof,
5. mono- or diglycerides of natural fatty acids, which optionally have been reacted to esters with any organic acid e.g. like acetic acid, lactic acid, citric acid or biacetyl tartaric acid or any combination thereof or any combination of substances within the different chemical groups,
6. polyglycerol esters of natural fatty acids,
7. alkyl polyglucosides,
8. esters of saccharose,
9. sugar glycerides,
10. sorbitan fatty acid esters like sorbitan monostearate, sorbitan tristearate, sorbitan monolaurate, sorbitan monooleate, sorbitan monopalmitate or any combination thereof,
11. polyoxyethylene-sorbitan fatty acid esters like Polysorbat^{®} 20 (polyoxyethylene-(20)-sorbitan monolaurate), like Polysorbat^{®} 40 (polyoxyethylene-(20)-sorbitan monopalmitate), like Polysorbat^{®} 60 (polyoxyethylene-(20)-sorbitan monostearate), like Polysorbat^{®} 65 (polyoxyethylene-(20)-sorbitan tristearate) or like Polysorbat^{®} 80 (polyoxyethylene-(20)-sorbitan monooleate),
12. C₁₂- to C₁₈-fatty alcohol ethoxylates,
13. compounds like viscous oil-like, but more polar liquids like such on the base of glycerin, lecithin or any combination thereof, and
14. glycolic compounds like polyethylene glycol, propylene glycol ester especially of natural fatty acids like oleic acid, lauric acid, stearic acid, palmitic acid or any combination thereof.

The at least one oil or the at least one pore generating agent of the porous inner layer (P) may preferably be present in the composition for the generation of a porous inner layer (P) or in the generated porous inner layer (P) in an amount in the range from 7 to 70 % by weight, more preferred in the range from 9 to 60 or from 11 to 50 % by weight, most preferred in the range from 13 to 40 or from 15 to 30 % by weight.

During the stretching step following the coextrusion, the coextruded film of the porous inner layer(s) are torn in such a way that the polar and non-polar substances may separate one from the other so that voids occur which may form the pores or pore channels or both. After the stretching, a porous inner layer (P) contains preferably a total porosity in the range from 5 to 70 % by volume, especially in the range from 12 to 55 or from 20 to 40 % by volume, and an interconnected porosity in the range from 1 to 70 % by volume, especially in the range from 10 to 55 or from 20 to 40 % by volume. If more than one porous inner layer (P) is included in the casing, the total porosity and the interconnected porosity may preferably be varied from layer to layer, especially in such way that the inner most or the second inner most porous layer of all the inner porous layers has the highest porosity or the highest interconnected porosities or both. Nevertheless, the group of all porous inner layers (P) of a casing often show a total porosity in the range from 5 to 70 % by volume, especially in the range from 12 to 55 or from 20 to 40 % by volume, and an interconnected porosity in the range from 1 to 70 % by volume, especially in the range from 10 to 55 or from 20 to 40 % by volume. If more than one porous inner layer (P) is included in the casing, the total porosity and the interconnected porosity may preferably be varied from layer to layer, especially in such way that the inner most or the second inner most porous layer of all the inner porous layers has the highest porosity or the highest interconnected porosities or both. Nevertheless, the group of all porous inner layers (P) of a casing often shows a total porosity in the range from 1 to 70 % by volume, especially in the range from 10 to 55 or from 20 to 40 % by volume, and an interconnected porosity in the range from 5 to 70 % by volume, especially in the range from 12 to 55 or from 20 to 40 % by volume.

Further on, the at least one porous inner layer (P) may contain at least one filler, especially at least one inorganic filler, preferably as at least one powder or at least one dispersion or both, like silica(s) especially as quartz, fused quartz, cristobalite, diatomaceous earth, silica sol, silica gel, precipitated or pyrogenic silica or any combination of these silica types, talc, calcium carbonate(s), barium sulfate, alumina(s), aluminum hydroxide(s), magnesium hydroxide, titania(s), zirconia, silicate(s) preferably as precipitated Ca-, Al-, CaAl-, NaAl-silicates, as mica(s), kaolin, wollastonite or any combination of these silicates, NaCl or any combination between substances of these different substance groups. Such materials are preferably added in a finely particulate form, although other forms like gel, solvent, solution etc. can be used if desired.

The at least one filler may preferably be present in the composition for the generation of a porous inner layer (P) in an amount in the range from 0.5 to 40 % by weight, more preferred in the range from 0.5 to 30 or from 1.5 to 25 % by weight, most preferred in the range from 2 to 20 or from 2.5 to 15 or from 3 to 10 % by weight.

Therefore, the compositions for the manufacture of a porous inner layer (P) as well as the composition of the generated porous inner layer (P) often consist essentially of the above mentioned three types of substances: Plastic material(s), oil(s) and filler(s).

The pore diameters of the group of pores and the porosity channels in the porous inner layers (P) making up the largest distribution may preferably be in the range from 0.01 to 200 µm, often in the range from 0.05 to 120 µm. Preferably, at least one porous inner layer (P) of the food casing has pore channels predominantly having diameters in the range from 0.02 to 100 µm, more preferred in the range from 0.1 to 80 µm, as calculated via the numbers of well visible pores in a cross-section under a scanning electron microscope (SEM) or on SEM photographs. Often, the pore size distribution of the pores of at least one porous inner layer (P) or of the whole food casing or of both shows a pore size distribution that has two, three or four peaks. The average diameter d₅₀ of the pore diameter distribution in the porous inner layers (P) may preferably be in the range from 0.1 to 50 µm, more preferred in the range from 0.5 to 40 or from 1 to 30 µm, most preferred in the range from 1.5 to 20 or from 2 to 15 µm. In many embodiments, the d₉₅ data of the pore diameter distribution in the porous inner layers (P) may preferably be in the range from 10 to 350 µm, more preferred in the range from 20 to 300 or from 30 to 240 µm, most preferred in the range from 40 to 180 or from 50 to 140 or from 60 to 100 µm.

The porosity of the different layers may be measured on cross-sections of casings or films prepared with a cryo-microtome. The measurements of the (total) porosity may be performed under a scanning electron microscope (SEM) or on SEM photographs, *e.g.* with the aid of measurement lines counting the number of points or measurement lengths for the porosity in relation to the total number of points respectively length of the total measurement length. The porosity is the sum of the interconnected porosity (pore channels etc.) and of the closed porosity (closed pores). The ratio of the interconnected porosity to the closed porosity may vary in broad ranges, but it is preferred to have an amount of interconnected porosity sufficient to absorb, retain, desorb and transfer the functional additive. The interconnected porosity may be measured according to the mercury pressure penetration method with the aid of adequate high pressure equipment.

The layer thickness of the different layers may be measured under a scanning electron microscope (SEM) or on SEM photographs, especially in a cross-section cut vertically or nearly vertically through the casing. The layer thickness of a single porous inner layer (P) may preferably be in the range from 5 to 100 µm, more preferred in the range from 8 to 85 or from 11 to 70 µm, most preferred in the range from 14 to 55 or from 17 to 40 µm. In many embodiments, the food casings according to the invention have at least one porous inner layer (P) of which each of the single porous inner layers (P) may have an average thickness each of many various thicknesses, such as about 7, 9, 11, 13, 15, 17, 19, 21, 23, 25, 27, 29, 31, 33, 35, 37, 39, 41, 43, 45, 47, 49 or of about 51 µm. If there is more than one porous inner layer (P), the layer thickness of the single porous inner layers (P) is often in the lower range of the data mentioned above, *i.e.* 7, 9, 11, 13, 15, 17, 19, 21,23,25 µm.

A single porous inner layer (P) or a group of porous inner layers (P) is preferably suitable or able to take up the at least one transferable functional additive such as liquid smoke within a contact time *e.g.* of up to 18 s at 20 °C and atmospheric pressure for a layer thickness of the single porous inner layer (P) or a group of porous inner layers (P) together in the range from 30 to 100 µm in an amount preferably in the range from 1 to 90 g/m², more preferably in the range from 5 to 80 g/m² or from 8 to 70 g/m², most preferred in the range from 11 to 60 g/m² especially of liquid smoke of the product "SmokEz Cherrywood Poly 2515" of Red Arrow.

The pore generating agent(s) and the inorganic filler(s) in some embodiments, may cause the formation of hollow spaces and pore channels, for example, called "the interconnected porosity". The interconnected porosity may be formed during the stretching or during the cooling down after the extrusion and stretching, or even during both steps, especially during the biaxial orientation of the plastic film during the phase separation.

In many embodiments, the surfaces of the hollow spaces and channels of the interconnected porosity of at least one porous inner layer (P) are able to absorb a transferable functional additive, to store it and, subsequently, to release and to transfer it. The functional additive is in many cases enriched in the porous inner layer (P) which then becomes in direct contact to the food when food is encased in the casing and then the at least one functional additive is transferred to the food. The direct contact to the food can be achieved not only mechanically, but additionally by including water in at least one porous inner layer (P) of the food casing and in the encased food.

The compositions and other properties of more than one layer of the type (P) within one casing are independent for one layer from the other layer, although they may be partially or totally identical if desired.

### The Layers (A)

A functional layer of the type (A) is understood to be a layer with a significant content of (co-)polyamides, preferably showing a content of (co-)polyamides in the range from 8 to 100 % by weight or from 10 to 95 % by weight, often from 15 to 90 or from 20 to 80 % by weight, sometimes from 35 to 70 or even from 50 to 60 % by weight. The same ranges as mentioned above and *infra* apply for the compositions for forming a layer (A). Such a layer (A) may contain one, two or even several different aliphatic polyamides, aliphatic copolyamides or both as well as optionally a content of partially aromatic polyamides, partially aromatic copolyamides or both. Examples of such (co-)polyamides are:
- aliphatic Polyamides: PA6, PA66, PA11, PA12;
- aliphatic Copolyamides: PA4/6, PA6/66, PA6/69, PA6/9, PA6/10, PA6/12, polyether amides, polyester amides, polyether ester amides, polyamide urethanes, poly(ether-block-amides);
- partially aromatic polyamides: PA6-I (I = isophthalic acid), Nylon-MXD-6 (polycondensate of m-xylylenediamine and adipic acid);
- partially aromatic copolyamides: PA6-I/6-T, PA6/6-I (I = isophthalic acid, T = terephthalic acid).

Especially preferred components are PA6, PA66, PA 12, PA6/66, Nylon-MXD-6 or PA6-I/6-T or any combination thereof. Especially preferred mixtures contain at least two different substances of these components. The amount of partially aromatic (co-)polyamides may preferably be not more than 40 % by weight in relation to a single layer (A), more preferred not more than 25 % by weight.

Additionally, the at least one layer of the type (A) may contain any other organic polymeric materials such as olefinic copolymers such as ethylene-(meth)acrylic acid copolymers (EMAA), ionomeric materials derived from or related to EMAA, ethylene vinyl alcohol copolymers (EVOH), even water-soluble or hot water-soluble synthetic organic polymeric materials like polyvinyl alcohols (PVA) which all may optionally be partially or totally saponified, polyvinyl pyrrolidone, copolymers of vinylalcohols with propene-1-ol, polyalkylene glycols, copolymers of vinyl pyrrolidone with at least one α,β-olefinic unsaturated monomer unit, polymeric materials of N-vinylalkylamides or (co-)polymers of acrylic acid, of acrylamide or of acrylic acid and acrylamide or any combination of all of these substances.

The amount of the at least one of the other organic polymeric materials of the at least one layer of the type (A) that are not (co-)polyamides is preferably less than 50 % by weight in relation to the content of solids and effective compounds of the composition to be used for a single layer (A) as well as in relation to the material of a single layer (A), more preferred not more than 40 % by weight, but often at least 0.1 % by weight.

The layer (A) preferably contains at least 50 % by weight of (co-)polyamide(s), often at least 60 % by weight, more preferred at least 70 % or at least 80 % by weight, sometimes even at least 90 % by weight, sometimes even at least 95 % or even up to 100 % by weight.

Further on, the layer (A) may optionally contain at least one fine-grained pigment, at least one additive like a lubricant, an anti-blocking agent, a light stabilizer or any combination of these. Therefore, the compositions for the manufacture of a layer (A) as well as the composition of the generated layer (A) can consist essentially of the above mentioned substances if desired.

The compositions and other properties of more than one layer of the type (A) within one casing are independent one from the other, although they may be partially or totally identical.

### The Layers (B)

Type (B) layers are typically effective as barriers for water vapor and are often predominantly based on polyolefinic substances. A good barrier for water vapor shows a water vapor transmission of 20 g/(m²•d) or less or even of zero, preferably a water vapor transmission in the range from 0.001 to 10 g/(m²•d), more preferred in the range from 0.01 to 7 g/(m²•d), often of about 5 g/(m²•d) or of about 4 g/(m²•d) or less. If the food casing according to the invention shows a water vapor transmission of 20 g/(m²•d) or less or even of zero, then the encased food does not easily loose its moisture and the encased meat products stay fresh for extended time periods.

Such water vapor barrier properties may be provided by using at least one polyolefin layer. These layers typically comprise predominantly of organic polymers based on polyethylene, polypropylene, polybutylene, copolymers containing units of ethylene, of propylene, of α-olefin preferably with 4 to 8 carbon atoms, of dienes or any combination of these units or any combination of such organic polymers. Even functionalized vinyl monomers like vinyl acetate, (meth)acrylic acid and (meth)acrylic acid ester may be possible co-units for the copolymers. The more preferred copolymers are such with C₂/C₃ or C₂/C₈ copolymers or a combination of these.

Further on, a layer of the type (B) may additionally contain at least one dye, at least one fine-grained pigment or both which may be used for the coloring and for the UV protection of such casings. At least one layer (B) may therefore optionally be colored. Therefore, the compositions for the production of a layer (B) as well as the composition of the generated layer (B) may consist essentially of the above mentioned substances if desired. The compositions and other properties of more than one layer of the type (B) within one casing are independent one from the other, although they may be partially or totally identical.

Often, a layer (B) has a good adhesion to an adjacent porous inner layer (P) so that there is not the necessity to add an adhesion promoter to the material of the layer (B) or to generate an adhesion layer (HV) between such layers. But it may be preferred in some embodiments, that the layer (B) includes at least one adhesion promoter, especially, if there is an oxygen barrier layer (C) or a (co)polyamide layer (A) adjacent which does not have a content of adhesion promoter(s).

### The Layers (C)

Layers of the type (C) are layers which are often good barriers for oxygen or other gases or both and show preferably then an oxygen gas transmission through the food casings of 30 cm³/(m²•d•bar) or less, more preferred of less than 20 cm³/(m²•d•bar), often in the range of 6 to 12 cm³/(m²•d•bar), sometimes of about 0 or about 1 to less than 6 cm³/(m²•d•bar).

Suitable plastic materials for such layers included ethylene vinyl alcohol copolymers (EVOH), which may optionally be partially or totally saponified, or vinylidene chloride copolymers (PVDC), for example with vinyl chloride or (meth)acrylate as comonomers or a mixture of these. These polymers may be admixed with additives, such as softeners or other organic polymers, e.g. copolyamides and/or ionomers. Therefore, the compositions for the manufacture of a layer (C) as well as the composition of the generated layer (C) may consist essentially of the above mentioned components if desired. The compositions and other properties of more than one layer of the type (C) within one casing are independent from one another, although they may be partially or totally identical. The layers (B) and (C) are often thermoplastic layers.

Preferably, there is at least one adhesion layer (HV) in direct contact to a layer (C) on at least one side of the layer (C), especially if the adjacent layer is not a layer having a content of an adhesion promoter.

### The Adhesive Layers (HV)

Very often, the layers of the type (A), (B) and (C) of the casing according to the invention do not adhere sufficiently one to the other when they are coextruded without any adhesive layer (HV) in between or without any layer having a sufficient content of at least one adhesion promoter or without both. Good adhesion may be achieved, for example, if at least one intermediate adhesive layer (HV) is generated between neighboring layers of at least one other type. Such a layer (HV) of suitable adhesion may predominantly contain grafted copolymers, linear copolymers or both types of copolymers. These copolymers may comprise more than one or even more than two different monomer types, for example ethylene units, propylene units, (meth)acrylic acid units, (meth)acrylic acid ester units, vinyl acetate units, maleic anhydride units or any combination of these. More preferred are maleic anhydride grafted polyethylenes (LDPE-g-MAAA, HDPE-g-MAA, LLDPE-g-MAA and the like), ethylene-acrylic acid ester copolymers, ethylene-vinyl acetate copolymers (EVA) or any combination of these. All these polymeric substances may be contained singly or in any combination of one with the other in any intermediate adhesive layer (HV). Further on, the layers (HV) may additionally contain any further organic polymers like polyethylene, any pigments, any other additives or any combination of these. Therefore, the compositions for the manufacture of a layer (HV) as well as the composition of the generated layer (HV) may consist essentially of the above mentioned substances if desired. The compositions and other properties of more than one layer of the type (HV) by comparing one with the other within one casing are independent one from the other, although they may be partially or totally identical. The intermediate adhesive layer(s) (HV) may be omitted if there is a sufficient own adhesion between neighboring layers as it often occurs for example between polyamide and some types of ethylene vinyl alcohol copolymers (EVOH) or if any adhesive promoter is admixed into the composition of the adjacent layer *e.g.* of the type (B).

Typically, the layer (HV) contains at least 50 % by weight of at least one substance that has adhesive properties. Often, its content is at least 60 % by weight, more preferred at least 70 % or 80 % by weight, sometimes at least 90 % by weight, in few cases even up to 100 % by weight. By the adequate selection and use of at least one adhesion promoter for the layer (HV), an excellent adhesion between the adjacent layers is generated. Thereby, adhesion of parts of the casing or parts at least of the inner layer to the food can be minimized or prevented.

Often, at least one layer (HV) is a weak or good barrier for water vapor, but in many embodiments a layer (HV) can be the only barrier for water vapor in the food casing. If there is another layer in the casing that is a barrier for water vapor, there may perhaps not be any layer (HV).

### Layers and the order in which they are arranged if desired

If any layer except a layer (HV) should contain at least one adhesion promoter (i. e. a substance with any desired amount of adhesive properties), the content of the at least one adhesion promoter in this layer is preferably up to 50 % by weight, more preferred up to 40 % by weight, often up to 30 or 20 % by weight, sometimes up to 10 % by weight. Suitable adhesion promoters include preferably organic polymeric materials of adhesive behavior.

In some embodiments, at least one layer (B) has a content of at least one adhesion promoter which may be in the range as just mentioned. In some embodiments, it is preferred that a layer (B) having a content of at least one adhesion promoter is in direct contact to a layer (P), which means that there is no layer (HV) between the layers (B) and (P). In the following listing of some of the possible embodiments of different layer sequences, a layer (B) that is in direct contact to a layer (P) preferably has such a content of at least one adhesion promoter, even if it is not indicated there.

Preferably, at least one layer has a barrier effect for oxygen gas. If the food casing of the invention has a barrier effect for oxygen gas and perhaps even additionally for some other gases, the encased food may preserved for a longer time. Often, a layer (A) may show a good barrier effect for oxygen gas.

Preferably, at least one layer of the casing is dense or nearly dense. This means that there is no or nearly no water transmission through this layer, that is, a water vapor transmission of not more than 20 g/m²d.. Such a layer typically has no or nearly no pores or channels which may transfer water to the next layer respectively. Preferably, such a dense or nearly dense layer is the first layer on the outside of the outer most porous inner layer (P). Then, the at least one transferable functional additive immobilized in at least one porous inner layer (P) cannot flow or cannot be sucked out of the porous inner layer (P) in the direction to the outer layers, at least not in a significant amount, but only or nearly only to the encased food. Further on, such an embodiment has the advantage to keep the water content of the food encased in the casing mostly or totally inside the casing. Especially preferred is that at least one layer (B) or (HV) or both of the casing are dense as defined *supra*. In some of the embodiments, the layers (A), (B), (C) and (HV) of a food casing - as far as they occur - are dense or nearly dense.

Often, the food casing according to the invention has at least one layer with a barrier effect for oxygen gas and at least one layer with a barrier effect for water vapor, whereby in several embodiments both of these effects may occur in the same layer(s). In several embodiments, especially at least one layer (B) or at least one layer (HV) or any combination thereof may show a barrier effect for water vapor.

Typically or mostly, the polymers used for the production of the layers of the casing or being part of the casing after its production or both have a molecular weight Mn preferably in a range of 10,000 to 5,000,000, more preferred of 15,000 to 500,000.

The multilayered coextruded stretched thermoplastic food casing according to the invention may consist essentially of or may consist of a plastic film which comprises 2, 3, 4, 5, 6, 7, 8, 9, 10, 11, 12 or more than 12 layers. At least one porous inner layer (P) or at least one of the porous inner layers (P) preferably has an interconnected porosity which is able to transfer the at least one transferable functional additive from at least one porous inner layer (P) to the food. Preferably, the food casing has at least one layer which has a barrier effect for oxygen gas or for water vapor or even for both. There may be even 2, 3, 4 or even more than 4 layers having at least one barrier effect.

The differences in construction, structure, composition or any combination of these between the single layers of the casing are each independent one from the other and may be zero, small or significant. The transition between the different single layers to the neighboring layers may be each independent one from the other from interface to interface and may be zero, small or significant and sometimes even continuously flowing so that there is no clear interface.

The at least one porous inner layer (P) may be combined with at least one other layer of any other type, especially with at least one of each of the function layer types of (A), (B), (C) or (HV) or any combination thereof. Many different multilayer structures are possible. Most preferred, a casing has two, three, four or five layers.

The following multilayer structures are preferred for the casing according to the invention, but are only representative of all of the possible structures:

| Outer side of the casing | Inner side of the casing |
|---|---|
| 1) | HV/P |
| 2) | B/P if (B) has a content of an adhesive component |
| 3) | A/HV/P |
| 4) | B/HV/P |
| 5) | C/HV/P |
| 6) | A/HV/B/P |
| 7) | A/C/HV/P |
| 8) | B/HV/B/P |
| 9) | A/HV/B/P/P |
| 10) | B/HV/C/HV/P |
| 11) | A/HV/B/HV/P |
| 12) | A/C/HV/B/HV/P |
| 13) | A/A/HV/B/HV/P |
| 14) | A/HV/B/HV/C/HV/P |
| 15) | A/HV/B/HV/A/HV/P |
| 16) | A/HV/B/P/P/P/P |
| 17) | B/HV/A/C/A/HV/P |
| 18) | A/HV/B/HV/P/P/P |
| 19) | A/HV/B/HV/A/HV/P/P |
| 20) | B/HV/A/C/HV/B/P/P |
| 21) | A/HV/B/HV/A/HV/B/P |
| 22) | B/HV/C/HV/A/HV/P/P |
| 23) | HV/A/HV/B/HV/C/HV/P |
| 24) | B/HV/C/HV/B/HV/A/HV/P/P |

The structures according to 3), 11), 12), 14) und 15) are especially preferred.

The total thickness of the multilayered thermoplastic food casing according to the invention over all layers can vary in broad ranges. In any embodiments the thickness ranges from 15 to 300 µm, often in the range from 20 to 240 µm or 25 to 180 µm, in many cases in the range from 30 to 140 µm, from 35 to 120 µm, from 40 to 100 µm or from 45 to 80 µm. In many embodiments, there is a total thickness of about 34, 36, 38, 40, 42, 44, 46, 48, 50, 52, 54, 56, 58, 60, 62, 64, 66, 68, 70, 72, 74, 76 or of about 78 µm. The total thickness is to be measured over at least 5 different points and is calculated as a mean value.

### Suitable Manufacturing Process

A suitable method comprises process steps of preparing at least two different thermoplastic compositions having each a content of at least one organic polymeric material to generate at least two different films by coextrusion that will be united at high temperature to form a multilayered tube which is always afterwards stretched. To the composition for respectively of the porous inner layer (P), at least one pore generating agent and preferably at least one inorganic filler is added. Before the coextrusion of the different films, the thermoplastic compositions are softened or even after the softening at least partially molten and lead through an arrangement of extruders being connected to heated annular multilayer die having at least as many ring-like channels for the different heated compositions. The different more or less molten films will be lead together in the die to combine to a tube which on cooling solidifies to a primary multilayered tube, which at least two layers are often well adhering together one to the other. The primary tube is not porous or shows only a limited porosity.

The tube will be typically cooled down spontaneously from the molten state so that an solid amorphous tubular primary film is generated. This primary film may be heated up again to typically at least 80 °C and may be then monoaxially or biaxially stretched *e.g.* with the aid of an air-cushion between two squeezing rollers. In order to adjust the back-shinkage of the stretched film the process may include a consecutive heat setting step. The stretching results in a high orientation of the multilayered thermoplastic film. The orientation of the molecules respectively of different crystallographic domains of the thermoplastic materials is primarily in one of the directions of the stretching. During this stretching, a huge number of pores and interconnected porosity channels is often generated when there are phase separations inside the multilayered thermoplastic film. After the stretching (plus heat set) the generated casing preferably contains a total porosity in the range from 5 to 70 % by volume, especially in the range from 5 to 55 or from 10 to 40 % by volume, and an interconnected porosity in the range from 3 to 70 % by volume, especially in the range from 5 to 55 or from 10 to 40 % by volume.

The content of pore generating agent(s) and of filler(s) in the at least one porous inner layer (P) contributes to the formation of the porosity as needed in the at least one porous inner layer (P) to take up and transfer later on a content of at least one transferable functional additive.

During the coextrusion and during the stretching, the plastic material of the casing is oriented and the casing gains a back-shrinkage (which may be gradually reduced by heat setting) so that the casing is in a tight and well-rounded condition even after use by a "fill-and-cook-in" procedure. Because of the presence of at least one layer within the multilayered coextruded casing showing a barrier effect, especially for sausages, the exudation of meat juice originating from the food through the casing wall is efficiently prevented.

The smaller the number of layers in the casing according to the invention is, the more care has to be taken that there is at least one layer generating sufficient strength and flexibility. This may cause that this at least one layer has no or nearly no pores and may perhaps be thicker. As the at least one porous inner layer (P) is weakened because of its pores and as its strength is strongly reduced if there are big pores or big well connected interstices or both, a good adhesion of the at least one porous inner layer (P) to the adjacent outer layer and a sufficient strength of at least one of the other layers is of importance. Sometimes, this is an optimization problem.

Later on, the stretched multilayered film may be lead through a further heating zone to generate a heat-setting, wherein the casing is usually stabilized by an entrapped air-bubble. In such way, the potential of thermal shrinkage may be reduced to low values as needed for practical application as food casing that is typically in the range from 5 to 20 % in longitudinal respectively in lateral direction, as measured at a temperature of 80 °C.

The multilayered coextruded casing may be formed after the coextrusion to a pipe-like food casing by lying flat, winding to a coil, customizing to a specific product or a combination of these, if needed. In most cases, the coextruded casings respectively the multilayered coextruded casings will have a pipe-like form. It may be closed at one end or may be cut and closed at one end on demand.

In a preferred application process, the casing which shall take up the at least one transferable functional additive may be lead through two squeezing rollers arranged one after the other, whereby there may be located a liquid bubble (Flüssigkeitsblase) containing the composition containing the at least one transferable functional additive which is preferably a solution or suspension or both. The porous inner layer (P) typically has a very high open porosity which allows to have an extraordinarily high absorption strength. Within few seconds, a sufficient amount of this composition is taken up by the capillary forces through the openings of the interconnected porosity. Typically, a separate drying is not necessary if the dosage is adequate.

Because of the relatively high back-shrinkage, the casings filled with food are of a well formed shape and there is no exudation of meat juice or jelly. The adequate selection of adhesion promoters and their content in the layer(s), contribute to create an excellent adhesion between the different layers. Therefore, no parts of the inner layer adhere to the surface of the food product after the casing has been peeled off.

The functional additives can be easily applied *e.g.* with a bubble of a liquid traveling through the casing (also known as "slug coating"). If desired, they could be applied in their commercially sold condition without adapting these additives specifically for its application. These additives could be easily and quickly taken up from the porous inner layer (P) alone by their capillary forces so that the surface of the inner layer (P) was immediately dry. These additives in several test runs were nearly completely transferred onto the encased food product, especially if the porous layer is manufactured from non-polar organic polymers, such as polyolefins e.g. of polypropylene, polyethylene, polybutylene or any combination thereof or like polystyrenes or of any combination of these two classes as matrix material so that the typically polar agents could be easily and nearly completely transferred to polar food stuffed in the casing.

The food casing according to the invention is especially suitable for the production of meat products like meat and sausages like fermented dry or semi-dry sausage (Rohwurstbrät), cooked-meat sausage (Kochwurst), scalded emulsion sausage (Brühwurst) like frankfurters, cooked ham (Kochschinken), ham and salt meat (Pökelware), of milk products and cheese products like soft cheese. Therefore, it may be used as a sausage casing. The food is modified especially in the appearance, in the flavor, in the taste or in any combination thereof by the at least one transferable functional additive that is transferred through the interconnected porosity from the inner porous layer(s) onto the food product. Often, at least one transferable functional additive is used to transfer aromatic essence to impart the flavor of a smoked food and the taste of a smoked food to the encased food.

### EXAMPLES AND COMPARISON EXAMPLES

The following examples according to the invention and the comparison example shall illustrate the invention in selected embodiments. Percentages are to be understood as percentages by weight, unless indicated otherwise or readily apparent from the context.

### Examples according to the Invention:

### 1. Manufacture of the compounds for the porous inner layer (P):

**Table 1: Formulations of the compounds for the generation of the porous inner layer (P), in % by weight**

| Example | 1 | 2 |
|---|---|---|
| Compound | A | B |
| Soybean oil (Oasis Foods Comp.) | 19 | 19 |
| Glycerin (#02171, 99.7 %, CP Hall Comp.) | 8 | 8 |
| Silica (Hi-Sil ABS, PPG Ind.) | 10 | 5 |
| Polypropylene (PP4772E1, Exxon Corp.) | 63 | 68 |

In a stirring kettle with a liquid jacket heating and with a stirrer moving along the walls of the kettle, the corresponding amounts of soya-bean oil and glycerin are charged and mixed. Then the fine-grained silica powder was added in small portions during stirring at about 1000 revolutions per minute. The mixture was slightly warmed to about 50 to 60 °C and was further stirred about 30 min at this temperature. Then the mixture was kept about 2 to 3 hours without stirring at room temperature so that the silica powder could further incorporate the soybean oil and the glycerin.

In a two-roll kneading machine of 25 mm cylinder diameter having a length to diameter ratio of 36 : 1 with a single-jet outlet nozzle, the propylene was or if present the polyamid 12 and the propylene were molten. At a second feeding position, the mixture of silica, soya-bean oil and glycerin, which has become slightly tacky, showed yet flotatable granules, was added directly into the molten plastic material and was homogeneously mixed. The turning of the screw was adjusted to 250 revolutions per minute, the mass stream to 8 kg per hour and the heatings to temperatures in the range of about 210 to 230 °C. The resulting white body was formed into a strand and the latter was cooled down in a water bath and was then cut into granules with the aid of a strand chopper.

### 2. Generation of the multilayered casing having a porous inner layer (P):

With the aid of the coextrusion technique, flexible three-layered primary casings were manufactured with three single-screw extruders and with a coextrusion annular die after them.

**Table 2: Base Compositions of the different layers of the flexible three-layered casings, in % by weight**

| Example | 1 | 2 |
|---|---|---|
| Outer layer (A) | 80 % PA6 (Grilon^{®} F34) and 20 % PA 6I/6T (Grivory^{®} G21) | |
| Intermediate layer (HV) | Adhesion Promoter on the base of MSA grafted poly(propylene-co-ethylene) (Bynel^{®} 50 E 571) | |
| Water vapor barrier layer | Layer (HV) | Layer (HV) |

| **Inner layer (P)** | **Compound A** | **Compound B** |
|---|---|---|
| Oxygen barrier layer | Layer (A) | Layer (A) |
| Water vapor barrier layer | Layer (HV) | Layer (HV) |

The primary tube was quickly cooled down to about 20 °C and then heated up to about 80 °C. At this temperature, it was biaxially stretched to an area stretch ratio of about 9.25 : 1. In a further heating zone, the generated casing was then heat-set so that the thermal shrinkage amounted to values still in the range from about 10 to about 14 %. The diameter of the heat-set casings was about 108 mm, and the total wall thickness was about 75 µm. The inner layer (P) showed about 40 % of the total wall thickness, the medium layer (HV) about 5 % of it and the outer layer (A) about 55 % of it. Then the liquid smoke "SmokEz Cherrywood Poly2515" of Red Arrow was deposited at room temperature according to the process previously described. The contacting time of the liquid smoke with the casing was 18 s. The squeezing rollers were then pressed together with a pressure of 2 bars, thereby terminating the bubble and distributing the liquid composition on the surface of the inner layer. The water vapor transmission of the casings according to the invention was in the range from 4.5 to 5.5. The oxygen gas transmission values of the casings according to the invention were in the range from 8 to 10.

The generated "Fleischwurst", a kind of scalded pork-rich sausage, was stuffed with the aid of an emulsion sizing, stuffing and clipping machine arrangement as commonly used for sausage fabrication.

### Comparison Example:

By using the coextrusion technique, an extrusion-blown three-layered flexible blown casing (Blasschlauch) was manufactured with the aid of three single-screw extruders and with a coextrusion annular die after them which was manufactured with:
a) an inner layer (P) generated from a mixture consisting essentially of 50 % by weight of polycaprolacton, 40 % by weight of potato starch and 10 % by weight of glycerin which had been prepared before in a two-roll kneading machine,
b) an intermediate layer (HV) consisting essentially of an adhesion promoter on the base of MSA grafted LLDPE (Modic^{®} AP L513) and
c) an outer layer (A) consisting essentially of 80 % PA6 (Grilon^{®} F34) and 20 % PA 6I/6T (Grivory^{®} G21).

The generated blown casing showed a diameter of about 130 mm. It had no orientation of the plastic material's domains as the blown casing had not been stretched. The total wall thickness was about 170 µm, of which about 50 % applied to the inner layer (P), about 5 % to the medium layer (HV) and about 45 % to the outer layer (A). Then the liquid smoke "SmokEz Cherrywood Poly2515" of Red Arrow was deposited at room temperature according to the process previously described. The contacting time of the liquid smoke with the casing was 18 s. The squeezing rollers were then pressed together on the casing with a pressure of 2 bars. The water vapor transmission of the food casings of the invention was 4.5 to 5.5 g/(m2•d). The oxygen gas transmission of the food casings of the invention was 8 to 10 cm³/(m2•d•bar).

The generated "Fleischwurst", a kind of scalded pork-rich sausage, was stuffed with the aid of an emulsion sizing, stuffing and clipping machine arrangement as commonly used for sausage fabrication.

**Table 3: Resulting data for the Examples and the Comparison Example**

| Example | Inner layer (P) wall thickness | Inner layer roughness Rₐ / R_{z} / Rₘₐₓ | Shrinkage of the casing [%] 80°C 15 min longitudinal/transverse | Uptake of liquid smoke | Colorimetric measurement values | Pore channel diameter distribution of the inner layer (P) d₅₀ / d₉₅ | Porosity |
|---|---|---|---|---|---|---|---|
| | [µm] | [µm] | | [g/m²] | [values L*a*b*] | [µm] | [vol.-%] |
| 1 | 28-33 | 2.1/12.7/15.4 | 19/18 | 32 | 55.7/14.9/ | 1 /174 | 42 |
| 2 | 30-33 | 1.8/10.5/13.8 | 19/19 | 18 | 59.8/14.3/ | 1.6/150 | 23 |
| Comparison | 70-90 | 10.2/49.2/58.8 | 0/0 | 8 | 63.4/14.1/ | No pores | 0* |

| | | | | | | | |
|---|---|---|---|---|---|---|---|
| * The uptake of liquid smoke occurred by invasion into the contained starch, not via pores | | | | | | | |

The total thickness of the wall of the just generated, but not yet stuffed casings was determined with the aid of a scanning electron microscope at cross-sections cut with a cryo-microtome. Preferably, at three places of the casing, three measurements were conducted and the average of them calculated. Table 3 shows such average values.

The roughness of the just generated, but not yet stuffed casings was determined on the surface of inner layer with the aid of a Perthometer S5P of Perthen and with a Perthen tracer RHT6/50E 6110457 (diamond) at a cut off grade of 0.8 mm. The measurements were undertaken according to DIN 4762, DIN ISO 4287/1 und DIN 4762/1E. The average peak-to valley height Rₐ is defined by the average of five successing singly measured sections of 5 mm each. The maximum surface roughness Rₘₐₓ is the maximum value of these five single measurements. R_{z} is the average of five single measurements over 5 mm each whereby the maximum roughness was determined for every single measurement. The average values themselves were calculated from the average values of the five measurements.

The shrinkage of the casings before any stuffing is defined by the change of the size of a section of the casing measured in longitudinal as well as in transverse direction: The size of the section was first measured at 20 °C (parameter X), then the section was dipped into and kept in a water bath of 80 °C for 15 minutes. Afterwards, the section was cooled down to 20 °C. Then its size was determined again (parameter Y). The back-shrinkage was calculated by the formula (parameter X - parameter Y) divided by parameter X and multiplied with 100. For each section, five single measurements were undertaken to calculate an average value per section. Each time, 3 sections were measured twice.

The uptake of the liquid smoke via the surface of the casing on the side of the inner layer (P) by the impregnation method already described was determined by weighing the casing just before the impregnation and then after its impregnation. The weight difference was put into relation with the surface area of the inner layer (P) of the section used for the determination. The contact time was 18 seconds. The excess of the liquid smoke was squeezed away by squeezing rollers which were then pressed together upon the casing with a pressure of 2 bars. The liquid smoke which was nevertheless contained in the porous portions of the casing was calculated in g/m². The data shown are average data of 5 measurements.

The colorimetric measurements were undertaken with an instrument CROMA METER CR-400 ofKonica-Minolta, which was equipped with a Xenon photoflash lamp. A measuring geometry was used for diffuse illumination, 0 ° observation angle and inclusion of luster. The measured area had a diameter of 8 mm, the illuminated area had a diameter of 11 mm. Light type D65 was selected. 10 measurements were performed along the circumference of the casing-free sausage, and an average was calculated from the data. After having peeled off the casing of the surface of the generated "Fleischwurst", a kind of scalded pork-rich sausage, the colorimetric measurements were performed: The darker the surface of the sausage is, the smaller is the value L*. A positive value of a* characterizes a reddish tint, a negative value of a* characterizes a greenish tint, a positive value of b* characterizes a yellowish tint, a negative value of b* characterizes a bluish tint. The sausage which was not treated with liquid smoke showed values L*a*b* of about 69.1 / 10.6 / 10.7 (Cie LAB color-space).

Although a section of the casings was measured for determining the porosity, practically no pore channels could be measured except in the porous inner layer (P). The pore channel diameter distribution of the inner layer (P) was determined with the aid of the mercury pressure penetration method according to DIN 66133 by which more and finer pore channels may be penetrated when the pressure increases. By measuring the penetrated volume in relation to the pressure, the pore channel diameter distribution is registered. The values d₅₀ characterize the pore channel diameter, at which 50 % of all registered pore channels are smaller than this value. The values d₉₅ reflect the pore channel diameter, at which 95 % of all registered pore channels are smaller than this value.

The casings of the examples 1 to 3 showed an orientation and even a homogeneous color transition from the surface of the stuffed food to the inner volume, whereby a depth of 0,1 to about 5 mm depending on the type of food casing of the surface near region of the sausages were colored and whereby the coloring was the strongest at the surface of the stuffed sausage. The shape of the casings was maintained even after longer time of storing because of the good back-shrinkage behavior. They do not tend to wrinkle. After the scalding and the cooling down of the casings which had been stuffed with "Fleischwurst, no "gel deposit" was observed. The color transition was homogeneous. The casings could be excellently peeled off from the stuffed sausage meat, so that there were no residual parts of the sausage or of torn off meat emulsion.

The casings of the comparison example were without orientation of the thermoplastic components as it was a blown casing which was manufactured without any stretching. Blown casings do not show a back-shrinkage. Often, the blown casings presented undesired wrinkling after the stuffing and after the processing by cooking. The amount of liquid smoke that was taken up from the inner layer was significantly lower than in the casings of the examples according to the invention.

The color transition from the colored inner layer to the surface of the sausage was considerably less intensive so that the surface of the sausage was less colored and lighter, so that the L* value was higher than in the examples according to the invention. Under consideration that the wall thickness of the porous inner layer (P) of the casings of the examples according to the invention is nearly three times smaller than of that of the comparison example, the efficiency of the uptake of liquid smoke into the porous inner layer (P) of the examples according to the invention is very much higher than in the comparison example.

The liquid smoke absorbed in the inner layer of the casings was submitted in a high extent to the sausages. This effect was visually observed and was seen too from the colorimetric values L*a*b*, if these values of the untreated surface of the inner layer (X) were compared with the impregnated surface of the inner layer after the uptake of the liquid smoke and after pulling off the casing (Z) - note Table 4. The lower the difference Δ L*a*b* = (X - Z) between the untreated and the impregnated casing after pulling it off is, the more liquid smoke was submitted from the inner layer to the meat emulsion and the lower is the amount of liquid smoke remaining in the inner layer. Further on, the values L*a*b* were determined for the impregnated casing (Y): The higher the difference Δ L*a*b* = (X - Y) between the untreated and the impregnated casing is, the more liquid smoke was absorbed in the inner layer.

Indeed, these values demonstrate that the casing of the comparison example retains less liquid smoke in the inner layer of the casing than such of the examples according to the invention (smaller Δ L* = (X - Z)), but that it had taken up significantly less liquid smoke than such of the examples according to the invention (smaller Δ L*a*b* = (X - Y)), which result corresponds with the amount of liquid smoke uptake per square meter mentioned above.

**Table 4: Colorimetric data of the different types of surfaces of the inner layers of the casings**

| Example | L*a*b* = X | L*a*b* = Y | L*a*b* = Z | Δ L*a*b* =(X-Y) | Δ L*a*b* =(X-Z) |
|---|---|---|---|---|---|
| 1 | 95.7/-0.1/0.5 | 81.5/5.2/39.4 | 92.6/1.3/ 12.0 | 14.2/-5.3/-38.9 | 3.1/-1.4/-11.5 |
| 2 | 94.8/-0.3/0.1 | 83.5/6.7/41.7 | 92.3/0.8/ 11.3 | 11.3/-7.0/-41.6 | 2.5/-1.1/-11.2 |
| Comp. | 93.5/0.6/-0.6 | 89.0/-1.1/17.1 | 93.0/-0.5/ 2.7 | 4.5/ 1.7/-17.7 | 0.5/ 1.1 / -3.3 |

- L*a*b* = X: measured at the surface of the untreated inner layer
- L*a*b* = Y: measured at the surface of the impregnated inner layer
- L*a*b* = Z: measured at the surface of the impregnated inner layer after submitting the liquid smoke to the sausage
- Δ L*a*b* = (X - Y): measure for the total liquid smoke absorption amount in the inner layer: The higher the Δ L* value, the higher is the amount of absorbed liquid smoke
- Δ L*a*b* = (X - Z): measure for the liquid smoke residual amount retained in the inner layer after submitting it to the sausage: The lower the Δ L* value, the lower is the amount of the liquid smoke residual amount retained in the meat emulsion after having peeled off the casing

## Claims

1. A multilayered coextruded stretched thermoplastic food casing comprising:
at least one porous inner layer, wherein the porosity of the porous inner layer has been at least partially generated by stretching of the coextruded casing, wherein the porosity as measured as indicated herein of the sum of all porous inner layers is in the range from 5 to 70 % by volume, and at least an innermost porous inner layer has an interconnected porosity, such that said innermost porous inner layer is able to absorb, retain, desorb and to transfer at least one transferable functional additive from said at least one porous inner layer to food encased in said casing,
at least one layer having a barrier effect for water vapor,
at least one layer having adhesion properties, said layer having adhesion properties optionally being the same as or different from said porous inner layer and/or said layer having barrier effect for water vapor.

2. A food casing according to claim 1, wherein the interconnected porosity comprises hollow spaces and channels that are able to absorb and desorb said at least one transferable functional additive.

3. A food casing according to claim 1, wherein the at least one transferable functional additive is contained in a porous inner layer having direct contact to food when food is encased in the casing.

4. A food casing according to claim 1, wherein the porous inner layer comprises pore channels as measured by scanning electron microscopy as indicated herein, having diameters in the range from 0.02 to 100 µm.

5. A food casing according to claim 1, wherein it contains at least one layer selected from the group consisting of
a layer comprising a (co)polyamide, a layer comprising a polyolefin, an oxygen barrier layer and an adhesion layer.

6. A food casing according to claim 1, comprising at least one adhesion layer (HV) in direct contact to an oxygen barrier layer on at least one side thereof.

7. A food casing according to claim 1, wherein at least one layer has a barrier effect for oxygen.

8. A food casing according to claim 1, wherein a layer comprising at least one adhesion promoter is in direct contact to said at least one porous inner layer.

9. A food casing according to claim 1, wherein said at least one porous inner layer comprises at least one plastic material and at least one oil.

10. A food casing according to claim 1, wherein said at least one porous inner layer comprises at least one fine-grained filler.

11. A food casing according to claim 1, wherein at least one plastic material, at least one fine-grained filler, optionally at least one oil and optionally at least one emulsifying agent in said porous inner layer contributes to the generation of pores and/or pore channels during production of the porous inner layer.

12. A casing of claim 1, wherein said additive comprises a colorant, a fragrance and/or a flavorant.

13. A food product encased in a casing according to claim 1.

14. A method for producing a multilayered coextruded stretched thermoplastic food casing according to claim 1, comprising generating pores and/or pore channels in the porous inner layer, and forming said porous inner layer together with further layers to produce said casing.

15. A method according to claim 14 wherein the pores and/or pore channels of the porous inner layer are generated at least partially during the stretching.

16. A method for transmitting at least one transferable functional additive selected from the group consisting of colorants, flavorants, fragrances and water-soluble additives from a food casing to a food contained inside a food casing according to claim 1, comprising transferring at least 50 % by weight of the at least one transferable functional additive a surface and/or to inner parts of the food.

## Patentansprüche

1. Mehrschichtige coextrudierte gestreckte thermoplastische Lebensmittelhülle, umfassend:
wenigstens eine poröse innere Schicht, wobei die Porosität der porösen inneren Schicht wenigstens teilweise durch Strecken der coextrudierten Hülle erzeugt worden ist, wobei die Porosität, wie gemessen wie hierin beschrieben, der Summe aller porösen inneren Schichten im Bereich von 5 bis 70 Vol.-% liegt und wenigstens eine innerste poröse innere Schicht eine vernetzte Porosität aufweist, so dass die innerste poröse innere Schicht fähig ist, wenigstens einen überführbaren funktionellen Zusatzstoff zu absorbieren, halten, desorbieren und von der wenigstens einen porösen inneren Schicht auf in der Hülle eingeschlossenes Lebensmittel zu überführen,
wenigstens eine Schicht, die eine Barrierewirkung für Wasserdampf aufweist,
und wenigstens eine Schicht, die Hafteigenschaften aufweist, wobei die Schicht, die Hafteigenschaften aufweist, gegebenenfalls die gleiche wie die poröse innere Schicht und/oder die Schicht, die Barrierewirkung für Wasserdampf aufweist, oder davon verschieden ist.

2. Lebensmittelhülle gemäß Anspruch 1, wobei die vernetzte Porosität Hohlräume und Kanäle umfasst, die fähig sind, den wenigstens einen überführbaren funktionellen Zusatzstoff zu absorbieren und zu desorbieren.

3. Lebensmittelhülle gemäß Anspruch 1, wobei der wenigstens eine überführbare funktionelle Zusatzstoff in einer porösen inneren Schicht enthalten ist, die direkten Kontakt zu Lebensmittel aufweist, wenn Lebensmittel in der Hülle eingeschlossen ist.

4. Lebensmittelhülle gemäß Anspruch 1, wobei die poröse innere Schicht Porenkanäle umfasst, die wie durch wie hierin beschriebene Rasterelektronenmikroskopie gemessene Durchmesser im Bereich von 0,02 bis 100 µm aufweisen.

5. Lebensmittelhülle gemäß Anspruch 1, wobei sie wenigstens eine Schicht enthält, ausgewählt aus der Gruppe bestehend aus
einer Schicht umfassend ein (Co)polyamid, einer Schicht umfassend ein Polyolefin, einer Sauerstoffbarriereschicht und einer Haftschicht.

6. Lebensmittelhülle gemäß Anspruch 1, umfassend wenigstens eine Haftschicht (HV) in direktem Kontakt mit einer Sauerstoffbarriereschicht an wenigstens einer Seite davon.

7. Lebensmittelhülle gemäß Anspruch 1, wobei wenigstens eine Schicht eine Barrierewirkung für Sauerstoff aufweist.

8. Lebensmittelhülle gemäß Anspruch 1, wobei eine Schicht, die wenigstens einen Haftförderer umfasst, in direktem Kontakt mit der wenigstens einen porösen inneren Schicht steht.

9. Lebensmittelhülle gemäß Anspruch 1, wobei die wenigstens eine poröse innere Schicht wenigstens ein Kunststoffmaterial und wenigstens ein Öl umfasst.

10. Lebensmittelhülle gemäß Anspruch 1, wobei die wenigstens eine poröse innere Schicht wenigstens einen feinkörnigen Füllstoff umfasst.

11. Lebensmittelhülle gemäß Anspruch 1, wobei wenigstens ein Kunststoffmaterial, wenigstens ein feinkörniger Füllstoff, gegebenenfalls wenigstens ein Öl und gegebenenfalls wenigstens ein Emulgierungsmittel in der porösen inneren Schicht zu der Erzeugung von Poren und/oder Porenkanälen während der Herstellung der porösen inneren Schicht beitragen.

12. Hülle gemäß Anspruch 1, wobei der Zusatzstoff einen Farbstoff, einen Duftstoff und/oder einen Aromastoff umfasst.

13. Lebensmittelprodukt, das in einer Hülle gemäß Anspruch 1 eingeschlossen ist.

14. Verfahren zum Herstellen einer mehrschichtigen coextrudierten gestreckten thermoplastischen Lebensmittelhülle gemäß Anspruch 1, umfassend das Erzeugen von Poren und/oder Porenkanälen in der porösen inneren Schicht und Formgeben der porösen inneren Schicht zusammen mit weiteren Schichten zum Herstellen der Hülle.

15. Verfahren gemäß Anspruch 14, wobei die Poren und/oder Porenkanäle der porösen inneren Schicht wenigstens teilweise während des Streckens gebildet werden.

16. Verfahren zum Übertragen von wenigstens einem überführbaren funktionellen Zusatzstoff, ausgewählt aus der Gruppe bestehend aus Farbstoffen, Aromastoffen, Duftstoffen und wasserlöslichen Zusatzstoffen, aus einer Lebensmittelhülle auf ein Lebensmittel, das im Inneren einer Lebensmittelhülle gemäß Anspruch 1 enthalten ist, umfassend Überführen von wenigstens 50 Gew.-% des wenigstens einen überführbaren funktionellen Zusatzstoffs auf eine Oberfläche und/oder innere Teile des Lebensmittels.

## Revendications

1. Enveloppe alimentaire thermoplastique étirée co-extrudée multicouche comprenant :
au moins une couche intérieure poreuse, dans laquelle la porosité de la couche intérieure poreuse est au moins partiellement générée par l'étirement de l'enveloppe co-extrudée, dans laquelle la porosité,
mesurée comme cela est indiqué dans les présentes, de la somme de toutes les couches intérieures poreuses est dans la plage de 5 à 70 % en volume, et au moins une couche poreuse la plus intérieure a une porosité interconnectée, de sorte que ladite couche poreuse la plus intérieure soit capable d'absorber, de retenir, de désorber et de transférer au moins un additif fonctionnel transférable de ladite au moins une couche intérieure poreuse au produit alimentaire enveloppé dans ladite enveloppe,
au moins une couche ayant un effet de barrière pour la vapeur d'eau,
au moins une couche ayant des propriétés d'adhérence, ladite couche ayant des propriétés d'adhérence facultativement identiques ou différentes de celles de ladite couche intérieure poreuse et/ou de ladite couche ayant un effet de barrière pour la vapeur d'eau.

2. Enveloppe alimentaire selon la revendication 1, dans laquelle la porosité interconnectée comprend des espaces creux et des canaux qui sont capables d'absorber et de désorber ledit au moins un additif fonctionnel transférable.

3. Enveloppe alimentaire selon la revendication 1, dans laquelle ledit au moins un additif fonctionnel transférable est contenu dans une couche intérieure poreuse en contact direct avec un produit alimentaire enveloppé dans l'enveloppe.

4. Enveloppe alimentaire selon la revendication 1, dans laquelle la couche intérieure poreuse comprend des canaux de pores ayant des diamètres, mesurés par microscopie à balayage électronique comme cela est indiqué dans les présentes, dans la plage de 0,02 à 100 µm.

5. Enveloppe alimentaire selon la revendication 1, dans laquelle elle contient au moins une couche sélectionnée dans le groupe se composant
d'une couche comprenant un (co)polyamide, d'une couche comprenant une polyoléfine, d'une couche de barrière d'oxygène et d'une couche d'adhérence.

6. Enveloppe alimentaire selon la revendication 1, comprenant au moins une couche d'adhérence (HV) en contact direct avec une couche de barrière d'oxygène sur au moins un côté de celle-ci.

7. Enveloppe alimentaire selon la revendication 1, dans laquelle au moins une couche a un effet de barrière pour l'oxygène.

8. Enveloppe alimentaire selon la revendication 1, dans laquelle une couche comprenant au moins un promoteur d'adhérence est en contact direct avec ladite au moins une couche intérieure poreuse.

9. Enveloppe alimentaire selon la revendication 1, dans laquelle ladite au moins une couche intérieure poreuse comprend au moins une matière plastique et au moins une huile.

10. Enveloppe alimentaire selon la revendication 1, dans laquelle ladite au moins une couche intérieure poreuse comprend au moins un remplisseur à grains fins.

11. Enveloppe alimentaire selon la revendication 1, dans laquelle au moins une matière plastique, au moins un remplisseur à grains fins, facultativement au moins une huile et facultativement au moins un agent émulsifiant dans ladite couche intérieure poreuse contribuent à la génération de pores et/ou de canaux de pores au cours de la production de la couche intérieure poreuse.

12. Enveloppe alimentaire selon la revendication 1, dans laquelle ledit additif comprend un colorant, un parfum et/ou un arôme.

13. Produit alimentaire enveloppé dans une enveloppe selon la revendication 1.

14. Procédé de production d'une enveloppe alimentaire thermoplastique étirée, co-extrudée et multicouche selon la revendication 1, comprenant la génération de pores et/ou de canaux de pores dans la couche intérieure poreuse, et la formation de ladite couche intérieure poreuse avec d'autres couches pour produire ladite enveloppe.

15. Procédé selon la revendication 14, dans lequel les pores et/ou les canaux de pores de la couche intérieure poreuse sont générés au moins partiellement au cours de l'étirement.

16. Procédé de transmission d'au moins un additif fonctionnel transférable sélectionné dans le groupe se composant de colorants, d'arômes, de parfums et d'additifs solubles dans l'eau à partir d'une enveloppe alimentaire à un produit alimentaire contenu à l'intérieur d'une enveloppe alimentaire selon la revendication 1, comprenant le transfert d'au moins 50 % en poids de l'au moins un additif fonctionnel transférable à une surface et/ou à des parties intérieures du produit alimentaire.
